# EUROPÄISCHE PATENTANMELDUNG

(11) **EP 3 477 143 A1**
(43) Veröffentlichungstag der Anmeldung: **01.05.2019**
(21) Anmeldenummer: 18202023.0
(22) Anmeldetag: 23.10.2018
(51) Int. Cl.: F16F 1/387

(54) **ELASTOMER-METALL-LAGER**

(30) Priorität: 27.10.2017 DE 102017010007
(71) Anmelder: Jörn GmbH, 71336 Waiblingen (DE)
(72) Erfinder: Lippke, Oliver, 71686 Remseck (DE)
(74) Vertreter: Liebl, Thomas

(57) **Zusammenfassung**

Die Erfindung betrifft ein Elastomer-Metall-Lager, insbesondere als Konuslager, mit einem zentralen, stabilen, starren, vorzugsweise metallischen Innenrohr (2), sowie mit einer zentralen Verbindungsschraube (3) durch das Innenrohr (2), mit der ein erstes zu lagerndes Bauteil (3) mit dem Innenrohr (2) verbindbar ist, weiter mit einem Elastomer-Ringteil (5), das das Innenrohr (2) umschließt, und in das ein stabiles, starres, vorzugsweise metallisches Anschlussteil (6) eingeformt ist, welches einen vom Elastomer-Ringteil (5) radial abstehenden Anschlussbereich (8) zum Anschluss eines zweiten zu lagernden Bauteils (9) aufweist, und mit einer in einem Stirnseitenbereich angeordneten massiven Druckscheibe (11) mit einer zentralen Bohrung (15), durch die die Verbindungsschraube (3) geführt ist. Erfindungsgemäß ist die Druckscheibe (11) ortsfest mit dem Innenrohr (2) an einer seiner Stirnseiten verbunden. Zwischen der Druckscheibe (11) und dem Elastomer-Ringteil (5) ist ein Schlauchring als im Querschnitt verformbarer Druckschlauch (20) angeordnet ist, und der Druckschlauch (20) ist zur Änderung und Verstellung seines Innendrucks und damit seiner Querschnittsform mit einer Pumpvorrichtung (17) verbindbar und aufpumpbar, dergestalt dass zur Einstellung unterschiedlicher Federkonstanten der Druckschlauch (20) bei einem vergleichsweise höheren Innendruck einen größeren Raumbereich im Zwischenraum zwischen der Druckscheibe (11) und dem Elastomer-Ringteil (5) einnimmt.

## Beschreibung

Die Erfindung betrifft ein Elastomer-Metall-Lager, insbesondere als Konuslager, nach dem Oberbegriff des Anspruchs 1.

Ein bekanntes, gattungsgemäßes Elastomer-Metall-Lager (DE 10 2004 047 173 A1) ist als elastisches Motorlager zur Lagerung einer Brennkraftmaschine an einem Kraftfahrzeug vorgesehen. Es weist ein zentrales, stabiles und starres Innenrohr aus relativ dickwandigem Metall auf mit einer durch das Innenrohr geführten Verbindungsschraube, mit der ein erstes zu lagerndes Bauteil, hier ein Aufbauträger, mit dem Innenrohr verbindbar ist.

Das Innenrohr ist von einem, sich bei einem vertikalen Einbau nach unten konisch verjüngenden Elastomer-Ringteil umschlossen, in das ein stabiles, starres Anschlussteil, hier ein Blechrohr, eingeformt ist, welches einen vom Elastomer-Ringteil radial abstehenden Anschlussbereich zum Anschluss eines zweiten zu lagernden Bauteils, hier eine Motorstütze, aufweist. Weiter ist eine obere, in einer Radialebene liegende Druckscheibe mit einer zentralen Bohrung, durch die die Verbindungsschraube geführt ist, vorgesehen.

Die Druckscheibe liegt hier an der oberen Stirnseite des Innenrohrs und ein plattenförmiger Teil des Aufbauträgers an der unteren Stirnseite des Innenrohrs an. Beide Teile sind mit der Verbindungsschraube gegen das Innenrohr verschraubt. Die Druckscheibe hat somit bezüglich des Innenrohrs und des Elastomer-Ringteils im montierten Zustand eine ortsfeste unveränderliche Lage. Zwischen der Druckscheibe und dem Elastomer-Ringteil liegt hier ein Spann-Ringteil aus Elastomermaterial von oben her mit einer Dichtlippe auf der Motorstütze, dergestalt dass bei allen Ein- und Ausfederzuständen die Dichtlippe die Motorstütze abdichtet und bei starker Ausfederung zusätzlicher Druck auf das Elastomer-Ringteil aufbringbar ist.

Die Federkonstante ist somit hier für eine bestimmte Lagerstelle durch die unveränderliche Geometrie und Relativlage der Bauteile und die Elastomerhärte vorgegeben und kann an die Lagerstelle nicht durch eine Veränderung angepasst oder nicht nachträglich an der Lagerstelle betriebsbedingt verändert und eingestellt werden. Änderungen der Federkonstante eines solchen gattungsgemäßen Standardlagers sind nur durch andere Lagerdimensionierungen, nicht jedoch am selben Lager möglich.

Aufgabe der Erfindung ist es, ein gattungsgemäßes Elastomer-Metall-Lager so weiterzubilden, dass dessen Federkonstante, vorzugsweise in axialer Richtung, ohne Änderungen an den Bauteilen oder der Elastomerhärte in einem gewissen Bereich veränderbar und einstellbar ist.

Diese Aufgabe wird mit den Merkmalen des Anspruchs 1 gelöst.

Gemäß Anspruch 1 ist die Druckscheibe ortsfest mit dem Innenrohr an einer seiner Stirnseiten verbunden. Zwischen der Druckscheibe und dem Elastomer-Ringteil ist ein Schlauchring als im Querschnitt verformbarer Druckschlauch angeordnet. Der Druckschlauch ist zur Änderung und Verstellung seines Innendrucks und damit seiner Querschnittform mit einer Pumpvorrichtung verbindbar und aufpumpbar, dergestalt, dass der Druckschlauch bei einem vergleichsweise höheren Innendruck einen größeren Raumbereich im Zwischenraum zwischen der Druckscheibe und dem Elastomer-Ringteil einnimmt. Dadurch wird ein Freiraum zwischen der Druckscheibe und dem Elastomer-Ringteil, in den sich das Elastomer-Ringteil belastungsabhängig hineinverformen kann, verkleinert und damit die Verformungsmöglichkeit beschränkt und behindert und/oder eine Vorspannung am Elastomer-Ringteil aufgebracht. Eine solche Einschränkung der Elastomer-Materialverformung und/oder Vorspannung führt zu einer Vergrößerung der Lagersteifigkeit, insbesondere in einer axialen Richtung.

Damit ist mit einem sehr einfachen und kostengünstigen Lageraufbau die Möglichkeit geschaffen, die Federsteifigkeit des Elastomer-Metall-Lagers zu verändern und einfach an bestimmte Lagergegebenheiten in gewissen Grenzen anzupassen. Vorteilhaft ist eine solche Einstellung unabhängig von der zentralen Verbindungsschraube möglich, so dass im eingebauten Zustand die Schraubenvorspannung und damit gegebenenfalls eine Verbindung zu einem Fahrzeug nicht betroffen ist.

Vorteilhaft können somit auch erfindungsgemäße, einstellbare Elastomer-Metall-Lager, welche an unterschiedliche Einbaugegebenheiten angepasst werden können, in größerer Stückzahl vorgehalten werden, ohne dass für jeden speziellen Lagereinsatz solche Lager subjektiv dimensioniert und hergestellt werden müssen. Die Modifikation eines gattungsgemäßen Elastomer-Metall-Lagers zur Realisierung der Einstellbarkeit ist durch die Verwendung eines Druckschlauchs zwischen der Druckscheibe und dem Elastomer-Ringteil einfach und kostengünstig durchführbar.

Explizit wird darauf hingewiesen, dass im Begriff "Elastomer-Metall-Lager" das Wort "Metall" in fachüblicher Weise weit auszulegen ist, so dass neben starren, weitgehend unverformbaren Metallmaterialien auch vergleichbare andere Materialien, insbesondere unverformbare, starre Kunststoffmaterialien mitumfasst sein sollen. Unter dem Begriff "Elastomer" wird fachüblich meistens vulkanisierbarer "Gummi" verstanden, wobei jedoch auch Gummi-Ersatzstoffe mitumfasst sein sollen.

Der im Querschnitt verformbare Druckschlauch soll zweckmäßig im nicht oder wenig aufgepumpten Zustand einen flachen Querschnitt und im stark aufgepumpten Zustand einen dagegen mehr ovalen bis kreisrunden Querschnitt aufweisen. Die Wandung des Druckschlauchs soll dazu nicht oder nur wenig dehnbar ausgeführt sein.

In einer bevorzugten Ausführungsform ist der Druckschlauch ein Hydraulik-Schlauchring, der mittels einer Hydraulikleitung mit einer steuerbaren Hydraulikpumpe verbindbar ist, wobei das Pumpmedium eine geeignete Hydraulikflüssigkeit ist. Durch Verwendung einer nicht kompressiblen und nur wenig temperaturabhängigen Hydraulikflüssigkeit ist eine weitgehend konstante Einstellung einer Federsteifigkeit mittels des Druckschlauchs möglich. Die Verbindung des Druckschlauchs mit der Hydraulikpumpe kann nur zur Herstellung eines vorgegebenen Drucks und damit einer vorgegebenen Einstellung einer Federkonstante erfolgen und gegebenenfalls anschließend wieder gelöst werden. Für eine Anpassung von unterschiedlichen Federkonstanten an unterschiedliche Betriebsgegebenheiten kann eine ständige Verbindung der Hydraulikpumpe in der Art eines Aktuators mit dem Druckschlauch erfolgen, wobei jeweils betriebsbedingt unterschiedliche Drücke und damit unterschiedliche Federkonstanten einstellbar sind.

Der Druckschlauch zwischen der Druckscheibe und dem Elastomer-Ringteil kann lediglich eingelegt sein, wobei dann die Druckscheibe zum Elastomer-Ringteil hin zweckmäßig tellerförmig gewölbt und der Druckschlauch in dieser Wölbung angeordnet ist. Zusätzlich oder alternativ kann der Druckschlauch, insbesondere zur Festlegung seiner Lage an der Druckscheibe angehaftet sein.

In einer weiteren Ausgestaltung kann zwischen dem Druckschlauch und dem Elastomer-Ringteil zudem eine flexible Scheibe, vorzugsweise als verformbare Konturblechscheibe angeordnet sein, mit der insbesondere eine Druckaufbringung auf das Elastomer-Ringteil durch den Druckschlauch gleichmäßig verteilt werden kann. Zusätzlich oder alternativ kann die zur Druckscheibe hin gerichtete Fläche des Elastomer-Ringteils flach kegelförmig, gegebenenfalls mit einer umlaufenden Einbuchtung im Bereich des Druckschlauchs ausgebildet sein.

In einer vorteilhaften konkreten Ausführungsform ist ein in einer Radialebene angeordnetes, plattenförmiges Anschlussteil des ersten zu lagernden Bauteils über eine dort angebrachte Bohrung mittels der Verbindungsschraube stirnseitig mit dem Innenrohr verbindbar, wobei zugleich damit die Druckscheibe ortsfest an der Stirnseite des Innenrohrs fixierbar ist.

In einer weiter bevorzugten Ausführungsform ist das Elastomer-Ringteil ein Elastomer-Konusteil, das sich gegenüberliegend zur Druckscheibe konisch verjüngt. Das eingeformte Anschlussteil ist als stabiles Topfteil mit offenem Topfboden, durch den das Innenrohr ragt, ausgebildet, wobei der Topfrand als vom Elastomer-Ringteil abragende, kragenförmige Anschlussplatte ausgeführt ist.

Weiter kann im Bereich des Topfbodenrandes des offenen Topfbodens das Elastomer-Ringteil einen umlaufenden Elastomer-Wulst als Elastomer-Anschlag aufweisen, der im Herstellzustand das Innenrohr in Axialrichtung überragt und der im eingebauten Lagerzustand unter Vorspannung und statischer Last gegenüber einer stirnseitig mit dem Innenrohr mit der Verbiegungsschraube angeschraubten Anschlagplatte einen Anschlagfreiraum aufweist. Der Elastomer-Anschlag kommt somit nur bei extremen Lagerbelastungen zum Einsatz.

Das Elastomer-Metall-Lager wird vorzugsweise mit vertikaler Achse und oben liegender Druckscheibe an der Lagerstelle eingebaut. Das erfindungsgemäße Lager ist beispielsweise zur Lagerung von Aggregaten, insbesondere zur Lagerung einer Brennkraftmaschine in einem Fahrzeug geeignet, kann jedoch auch zur Lösung anderer Lageraufgabe, zum Beispiel als Fahrerhauslager oder Kabinenlager herangezogen werden.

Anhand einer Zeichnung wird ein Ausführungsbeispiel der Erfindung näher erläutert.

Es zeigen:
- Figur 1: ein Herstellteil eines verstellbaren Elastomer-Metall-Lagers,
- Figur 2: eine Einbausituation des Elastomer-Metall-Lagers nach Figur 1 in einem nicht vorgespannten Zustand,
- Figur 3: die Einbausituation nach Figur 2 im vorgespannten Zustand, und
- Figur 4: die Einbausituation nach Figur 3 im vorgespannten Zustand unter statischer Last.

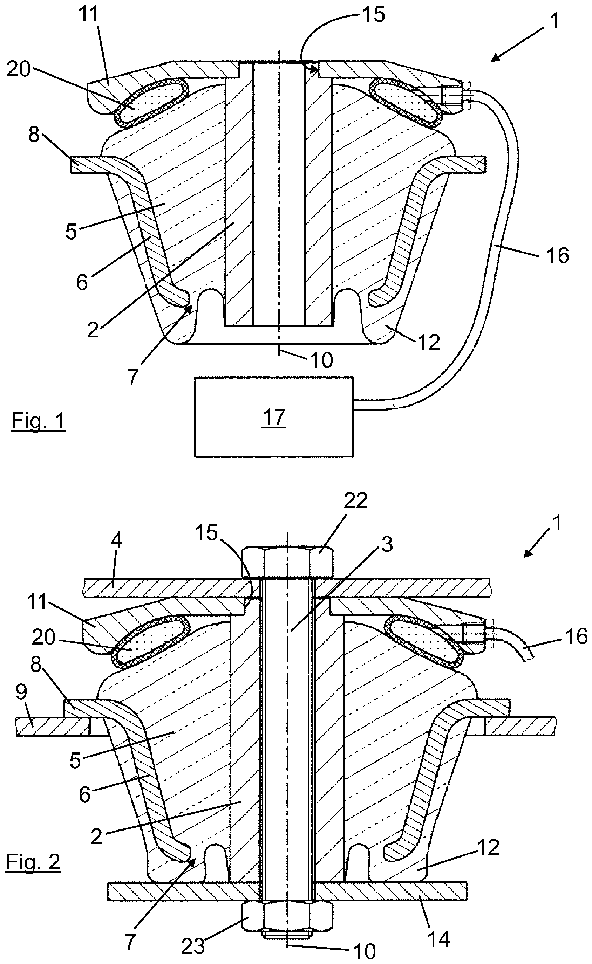

In Figur 1 ist ein Längsschnitt eines Herstellsteil eines verstellbaren Elastomer-Lagers 1 in der Art eines Konuslagers gezeigt, welches ein zentral stabiles, starres Innenrohr 2 aus Metall aufweist. Wie aus der Einbausituation der Figuren 2 bis 4 ersichtlich, ist mit einer zentralen Verbindungsschraube 3 durch das Innenrohr 2 ein erstes zu lagerndes Bauteil 4, hier beispielsweise ein Bauteil eines Fahrzeugs, mit dem Innenrohr 2 verbunden. Ein Elastomer-Ringteil 5 als tragendes Elastomer-Teil umschließt das Innenrohr 2 und ist konkret als Gummiringteil am Innenrohr 2 anvulkanisiert.

In das Elastomer-Ringteil 5 ist ein Anschlussteil als stabiles Topfteil 6 eingeformt, welches einen offenen Topfboden 7 aufweist, durch den das Innenrohr 2 ragt und das mit einem Topfrand als radial am Elastomer-Ringteil 5 abragende Anschlussplatte 8 ausgebildet ist. Wie aus der Einbausituation der Figuren 2 bis 4 ersichtlich ist, wird mit dieser Anschlussplatte 8 ein zweites zu lagerndes Bauteil 9, beispielsweise eine Motorstütze einer Brennkraftmaschine eines Fahrzeugs verbunden.

Das Elastomer-Metall-Lager 1 ist mit vertikaler Achse 10 eingebaut, wobei in einem oberen Stirnseitenbereich eine massive Druckscheibe 11 angeordnet ist mit einer zentralen Bohrung 15. Die zentrale Bohrung 15 hat einen kleineren Durchmesser im Vergleich zum Durchmesser des Innenrohrs 2 und die Druckscheibe 11 ist stirnseitig bündig auf einen zugeordneten Absatz des Innenrohrs 2 aufgesteckt.

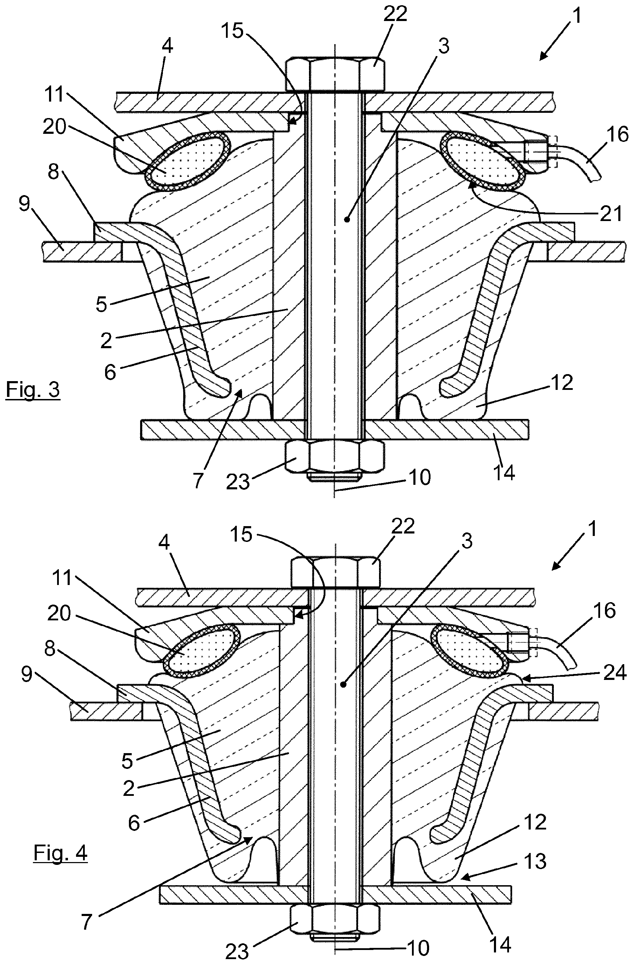

Das Elastomer-Ringteil 5 ist ein Elastomer-Konusteil, das sich gegenüberliegend zur Druckscheibe 11 konisch verjüngt. Im Bereich des Topfbodenrandes des offenen Topfbodens 7 weist das Elastomer-Ringteil 5 einen umlaufenden Elastomer-Wulst als Elastomer-Anschlag 12 auf, der im Herstellzustand entsprechend Figur 2 das Innenrohr in Axialrichtung überragt. In der in Figur 4 dargestellten Einbausituation wird unter Vorspannung und unter statischer Last ein Anschlagfreiraum 13 zwischen dem Elastomer-Anschlag 12 und einer Anschlagplatte 14 gebildet, welche mit der Verbindungsschraube 3 von unten her stirnseitig mit dem Innenrohr 2 verschraubt ist.

Zwischen der Druckscheibe 11 und dem Elastomer-Ringteil 5 ist ein an der Druckscheibe 11 angehafteter Schlauchring als im Querschnitt verformbarer Druckschlauch 20 angeordnet, der mit einer Hydraulikleitung 16 mit einer Pumpvorrichtung als steuerbare Hydraulik-Pumpe 17 lösbar verbunden ist. Je nach Bedarf kann die Verbindung nur zeitweise zur Einstellung eines bestimmten Drucks im Druckschlauch 20 erfolgen oder auch ständig für eine betriebsbedingte Anpassung des Drucks aufrechterhalten werden.

Die Druckscheibe 11 ist hier nach unten tellerförmig gewölbt, wobei der Druckschlauch 20 in dieser Wölbung angeordnet ist und auf das Elastomer-Ringteil 5 eine Druckkraft ausübt. Zwischen dem Druckschlauch 20 und der Oberseite des Elastomer-Rings 5 kann gegebenenfalls noch eine die Druckkraft verteilende, flexible Scheibe (nicht dargestellt) angeordnet sein. Die zum Druckschlauch 20 hin gerichtete Oberfläche des Elastomer-Ringteils 5 ist flach kegelförmig mit einer umlaufenden Einbuchtung 21 ausgebildet.

Die mechanische Anbindung erfolgt konkret dergestalt, dass die Verbindungsschraube 3 durch eine Bohrung des ersten zu lagernden Bauteils 4, durch eine zentrale Bohrung 15 der Druckscheibe 11, durch das Innenrohr 2 und durch eine Bohrung der Anschlagplatte 14 geführt ist und sich die Verbindungsschraube 3 mit einem Schraubenkopf 22 oben am ersten zu lagernden Bauteil 4 und mit einer Schraubenmutter 23 unten an der Anschlagplatte 14 abstützt.

Die Funktion des mechanisch verstellbaren Elastomer-Lagers 1 wird anhand der Einbausituationen der Figuren 2 bis 4 weiter erläutert:
In Figur 2 ist eine weitgehend unvorgespannte Einbausituation dargestellt, bei der nur ein geringer Druck im Druckschlauch 20 mit der Hydraulikpumpe 17 aufgebracht ist. Ersichtlich ist dabei die Querschnittsform des Druckschlauchs 20 flach, so dass nur relativ wenig Druckvorspannung auf das Elastomer-Ringteil 5 durch den Druckschlauch 20 wirkt. Entsprechend ist die Federkonstante des Elastomer-Lagers 1 bei dieser Einstellung des Druckschlauchs relativ klein.

Dabei wird ersichtlich beim Einfedern des Lagers nach unten eine freie Verformung des Elastomer-Ringteils 5 auch durch die flache Querschnittsform des Druckschlauchs 20 behindert und damit die Federsteifigkeit erhöht.
In der Einbausituation nach Figur 3 ist der nahezu maximal vorgespannte Zustand gezeigt, bei dem durch einen erhöhten Druck im Druckschlauch dessen Querschnittsform oval vergrößert in Richtung einer kreisrunden Querschnittsform verstellt ist. Dadurch wird im Vergleich zur Figur 2 bei der Einstellung nach Figur 3 eine Vorspannung aufgebracht und eine betriebsbedingte, belastungsabhängige Verformung des Elastomer-Ringteils 5 stark behindert, so dass die Federkonstante des Elastomer-Metall-Lagers 1 insbesondere in vertikaler Richtung entsprechend erhöht ist. In Zwischenstellungen zwischen den Figuren 2 und 3 ist eine zugeordnete, kontinuierlich dazwischenliegende Einstellung der Federkonstante möglich.

Die endgültige Einbausituation mit der Einstellung nach Figur 3 ist in Verbindung mit einer statischen Last in Figur 4 dargestellt, wodurch das Elastomer-Ringteil 5 so verformt ist, dass der Elastomer-Anschlag 12 von der Anschlagplatte 14 mit einem dazwischenliegenden Anschlagfreiraum 13 abgehoben ist und zwischen der Anschlussplatte 8 und dem Druckschlauch 20 ein umlaufender Gummiwulst 24 ausgebildet ist, der zudem zur Vergrößerung der Federkonstante beiträgt.

Bei dem verstellbaren Elastomer-Lager 1 als Konuslager kann somit durch eine einfache Druckeinstellung oder Drucksteuerung im Druckschlauch 20 die Federkonstante, insbesondere in vertikaler Richtung in einem durch den Druckschlauch 20 vorgegebenen Einstellbereich verändert und an vorliegende Lagergegebenheiten gegebenenfalls auch nach einem Einbau des Elastomer-Metall-Lagers 1 eingestellt und angepasst werden.

## Patentansprüche

1. Elastomer-Metall-Lager, insbesondere als Konuslager,
mit einem zentralen, stabilen, starren, vorzugsweise metallischen Innenrohr (2),
mit einer zentralen Verbindungsschraube (3) durch das Innenrohr (2), mit der ein erstes zu lagerndes Bauteil (3) mit dem Innenrohr (2) verbindbar ist,
mit einem Elastomer-Ringteil (5), das das Innenrohr (2) umschließt, und in das ein stabiles, starres, vorzugsweise metallisches Anschlussteil (6) eingeformt ist, welches einen vom Elastomer-Ringteil (5) radial abstehenden Anschlussbereich (8) zum Anschluss eines zweiten zu lagernden Bauteils (9) aufweist, und
mit einer in einem Stirnseitenbereich angeordneten massiven Druckscheibe (11) mit einer zentralen Bohrung (15), durch die die Verbindungsschraube (3) geführt ist,
**dadurch gekennzeichnet,**
**dass** die Druckscheibe (11) ortsfest mit dem Innenrohr (2) an einer seiner Stirnseiten verbunden ist,
**dass** zwischen der Druckscheibe (11) und dem Elastomer-Ringteil (5) ein Schlauchring als im Querschnitt verformbarer Druckschlauch (20) angeordnet ist, und
**dass** der Druckschlauch (20) zur Änderung und Verstellung seines Innendrucks und damit seiner Querschnittsform mit einer Pumpvorrichtung (17) verbindbar und aufpumpbar ist, dergestalt dass der Druckschlauch (20) bei einem vergleichsweise höheren Innendruck einen größeren Raumbereich im Zwischenraum zwischen der Druckscheibe (11) und dem Elastomer-Ringteil (5) einnimmt.

2. Elastomer-Metall-Lager nach Anspruch 1, **dadurch gekennzeichnet, dass** der Druckschlauch (20) im nicht oder wenig aufgepumpten Zustand einen flachen Querschnitt und im stark aufgepumpten Zustand einen dagegen mehr ovalen bis kreisrunden Querschnitt aufweist.

3. Elastomer-Metall-Lager nach Anspruch 1 oder 2, **dadurch gekennzeichnet, dass** der Druckschlauch (20) mittels einer Hydraulikleitung (16) mit einer Pumpvorrichtung als steuerbaren Hydraulik-Pumpe (17) ständig oder zweitweise verbunden ist und das Pumpmedium Hydraulikflüssigkeit ist.

4. Elastomer-Metall-Lager nach einem der Ansprüche 1 bis 3, **dadurch gekennzeichnet, dass** der Druckschlauch (20) an der Druckscheibe (11) angehaftet ist.

5. Elastomer-Metall-Lager nach einem der Ansprüche 1 bis 4, **dadurch gekennzeichnet, dass** die Druckscheibe (11) zum Elastomer-Ringteil (5) hin tellerförmig gewölbt ist, und
dass zwischen der Druckscheibe (11) in deren Wölbung und dem Elastomer-Ringteil (5) der Druckschlauch (20) angeordnet ist.

6. Elastomer-Metall-Lager nach Anspruch 5, **dadurch gekennzeichnet, dass** zwischen dem Druckschlauch (20) und dem Elastomer-Ringteil (5) eine flexible Scheibe, vorzugsweise als verformbare Konturblechscheibe angeordnet ist.

7. Elastomer-Metall-Lager nach einem der Ansprüche 1 bis 5, **dadurch gekennzeichnet, dass** die zur Druckscheibe (11) hin gerichtete Fläche des Elastomer-Ringteils (5) flach kegelförmig, gegebenenfalls mit einer umlaufenden Einbuchtung (21) im Bereich des Druckschlauchs (20) ausgebildet ist.

8. Elastomer-Metall-Lager nach einem der Ansprüche 1 bis 7, **dadurch gekennzeichnet, dass** mittels der Verbindungsschraube (3) ein in einer Radialebene angeordnetes, plattenförmiges Anschlussteil des ersten zu lagernden Bauteils (4) über eine dort angebrachte Bohrung stirnseitig mit dem Innenrohr (2) verbindbar ist und zugleich damit die Druckscheibe (11) ortsfest an der Stirnseite des Innenrohrs (2) fixierbar ist.

9. Elastomer-Metall-Lager nach einem der Ansprüche 1 bis 8, **dadurch gekennzeichnet, dass** das Elastomer-Ringteil (5) ein Elastomer-Konusteil ist, das sich gegenüberliegend zur Druckscheibe (11) konisch verjüngt, und
dass das eingeformte Anschlussteil als stabiles Topfteil (6) mit offenem Topfboden (7), durch den das Innenrohr (2) ragt, und mit einem Topfrand als Anschlussplatte (8) ausgebildet ist.

10. Elastomer-Metall-Lager nach Anspruch 9, **dadurch gekennzeichnet, dass** im Bereich des Topfbodenrandes des offenen Topfbodens (7) das Elastomer-Ringteil (5) einen umlaufenden Elastomer-Anschlag (12) aufweist, der im Herstellzustand das Innenrohr (2) in Axialrichtung überragt und der im eingebauten Lagerzustand unter Vorspannung und statischer Last gegenüber einer stirnseitig mit dem Innenrohr (2) mit der Verbindungsschraube (3) verschraubten Anschlagplatte (14) einen Anschlagfreiraum (13) aufweist.

11. Elastomer-Metall-Lager nach einem der Ansprüche 1 bis 10, **dadurch gekennzeichnet, dass** das Elastomer-Metall-Lager (1) mit vertikaler Achse (10) und mit oben liegender Druckscheibe (11) an der Lagerstelle eingebaut ist.
